# EUROPÄISCHE PATENTANMELDUNG

(11) **EP 4 623 767 A2**
(43) Veröffentlichungstag der Anmeldung: **01.10.2025**
(21) Anmeldenummer: 25188643.8
(22) Anmeldetag: 23.10.2019
(51) Int. Cl.: A47J 31/36

(54) **VORRICHTUNG ZUM ZUFÜHREN VON KAFFEEPULVER IN EINE BRÜHKAMMER EINER KAFFEEMASCHINE**

(30) Priorität: 21.12.2018 DE 202018107372 U
(62) Teilanmeldung aus: 19797590.7
(71) Anmelder: Eversys S.A., 3960 Sierre (CH)
(72) Erfinder: Locher, Grégoire, 1967 Daillon (CH); Bétrisey, Stéphane, 1906 Charrat (CH)
(74) Vertreter: Charrier Rapp & Liebau

(57) **Zusammenfassung**

Die Erfindung betrifft eine Vorrichtung zum Zuführen von Kaffeepulver (a) in eine Brühkammer einer Kaffeemaschine, umfassend einen eine Einfüllöffnung (2) aufweisenden Brühkammerbehälter (1) zur Aufnahme und zum Aufbrühen des Kaffeepulvers (a) und eine Zufuhreinrichtung (3) zur Zuführung des Kaffeepulvers (a) durch die Einfüllöffnung (2) in den Brühkammerbehälter (1). Durch eine Rütteleinrichtung (4), welche mit dem Brühkammerbehälter (1) gekoppelt ist, wird der Brühkammerbehälter (1) während und/oder nach dem Einfüllen von Kaffeepulver in Vibration versetzt. Dadurch wird das in den Brühkammerbehälter eingefüllte Kaffeepulver verdichtet und vergleichmäßigt und es wird insbesondere verhindert, dass sich das Kaffeepulver beim Einfüllen in den Brühkammerbehälter bergförmig anhäuft. Die Rütteleinrichtung (4) umfasst eine alternierend und drehend hin- und her bewegbare Welle (11), wobei die Welle (11) mit dem Brühkammerbehälter (1) verbunden ist, um die Bewegungen der Welle (11) auf den Brühkammerbehälter (1) zu übertragen, wobei die Welle (11) in axialer Richtung bewegbar ist, insbesondere in periodischen Axialbewegungen.

## Beschreibung

Die Erfindung betrifft eine Vorrichtung zum Zuführen von Kaffeepulver in eine Brühkammer einer Kaffeemaschine nach dem Oberbegriff des Anspruchs 1.

Die Qualität von in voll- oder halbautomatischen Kaffeemaschinen durch Aufbrühen von Kaffeepulver mit heißem Wasser hergestellte Kaffeegetränke häng neben einer Vielzahl weiterer Parameter u.a. ganz wesentlich von der Verteilung, der Homogenität und der Dichte des in einer Brühkammer der Kaffeemaschine eingefüllten Kaffeepulvers ab. Das Kaffeepulver wird in voll- oder halbautomatischen Kaffeemaschinen entweder durch eine integrierte Mahlvorrichtung erzeugt oder in einem Vorratsbehälter für bereits vorgemahlenes Kaffeepulver bereitgestellt und portionsweise bei der Herstellung eines Kaffeegetränks in die Brühkammer transportiert, darin gegebenenfalls verdichtet und zur Herstellung des Kaffeegetränks mit heißem Wasser aufgebrüht.

Beim Zuführen des in einer Mahlvorrichtung der Kaffeemaschine gemahlenen oder in dem Vorratsbehälter bereitgestellten Kaffeepulvers in die Brühkammer entsteht das Problem, dass sich beim Einfüllen des Kaffeepulvers in einen Brühkammerbehälter keine gleichmäßige Nivellierung des in den Brühkammerbehälter eingefüllten Kaffeepulvers ergibt. Das Kaffeepulver fällt dabei schwerkraftbedingt von oben durch eine Einfüllöffnung in den Brühkammerbehälter und bildet dort einen ungleichmäßig geformten, bergförmigen Haufen von Kaffeepulver aus. Insbesondere bei der Herstellung von Espresso wird das Kaffeepulver in dem Brühkammerbehälter durch mechanischen Druck verdichtet, wobei die Druckeinwirkung entweder manuell unter Verwendung eines Stempels durch einen Barista außerhalb der Kaffeemaschine oder automatisch innerhalb der Kaffeemaschine durchgeführt wird, indem ein Stempel von oben durch die Einfüllöffnung in den Brühkammerbehälter gepresst wird, um das Kaffeepulver zu verdichten. Der dabei angewandte Druck hat ebenfalls erheblichen Einfluss auf die Qualität des hergestellten Kaffeegetränks. Aufgrund der bergförmigen Anhäufung des Kaffeepulvers beim Einfüllen in den Brühkammerbehälter ergibt sich eine ungleichmäßige Verteilung des Kaffepulvers im Brühkammerbehälter und beim Pressen des Kaffeepulvers eine inhomogene Dichteverteilung des im Brühkammerbehälter verpressten Kaffeepulvers. Dies hat nachteilige Auswirkungen auf die Qualität des hergestellten Kaffeegetränks.

Zur Behebung dieses Problems wurden im Stand der Technik Einrichtungen zum Einfüllen und Verteilen von Kaffeepulver in Brühkammerbehälter von Kaffeemaschinen vorgeschlagen, mit denen eine gleichmäßige Befüllung des Brühkammerbehälters ermöglicht wird. So ist beispielsweise aus der EP 3 400 853 A1 eine Vorrichtung zum Einfüllen und gleichmäßigen Verteilen von Kaffeepulver in einen Siebträgerbehälter einer Espressomaschine bekannt, wobei die Vorrichtung einen im Siebträgerbehälter drehbar gelagerten Rotor mit daran angeordneten Rotorblättern umfasst. Die Rotorblätter sind dabei in Bezug auf die Drehachse des Rotors geneigt. Während des Einfüllens von Kaffeepulver in den Siebträgerbehälter wird der Rotor in Drehung versetzt, wodurch sich der Rotor nach oben bewegt und die eingefüllte Kaffeepulvermenge gleichmäßig durchmischt wird.

Diese aus dem Stand der Technik bekannte Vorrichtung zum Einfüllen und Verteilen von Kaffeepulver in einen Brühkammerbehälter einer Kaffeemaschine erweist sich jedoch als nachteilig, weil die in den Brühkammerbehälter eingefüllte Menge des Kaffeepulvers nicht durch einen von oben in die Einfüllöffnung des Brühkammerbehälters einführbaren Stempel verdichtet werden kann, weil im Bereich der Einfüllöffnung ein Deckel auf dem Siebträgerbehälter angeordnet ist, in dem der Rotor drehbar gelagert ist. Das mit der aus dem Stand der Technik bekannten Vorrichtung in den Siebträgerbehälter eingefüllte Kaffeepulver kann daher nicht durch innerhalb der Kaffeemaschine automatisch durch Verwendung eines integrierten Stempels in dem Brühkammerbehälter komprimiert werden.

Hiervon ausgehend liegt der Erfindung die Aufgabe zugrunde, eine Vorrichtung zum Zuführen von Kaffeepulver in eine Brühkammer einer Kaffeemaschine bereitzustellen, die einerseits eine möglichst gleichmäßige und homogene Verteilung des Kaffeepulvers in einem Brühkammerbehälter der Brühkammer und andererseits eine Verdichtung des eingefüllten Kaffeepulvers durch Einwirkung eines in der Kaffeemaschine integrierten Stempels ermöglicht.

Diese Aufgabe wird mit einer Vorrichtung zum Zuführen von Kaffeepulver in eine Brühkammer einer Kaffeemaschine mit den Merkmalen des Anspruchs 1 gelöst. Bevorzugte Ausführungsformen der Vorrichtung sind in den abhängigen Ansprüchen aufgezeigt.

Die erfindungsgemäße Vorrichtung umfasst einen Brühkammerbehälter mit einer Einfüllöffnung sowie eine Zufuhreinrichtung zur Zuführung des Kaffeepulvers durch die Einfüllöffnung in den Brühkammerbehälter, der zur Aufnahme und zum Aufbrühen des Kaffeepulvers dient. Zur Vergleichmäßigung des mittels der Zufuhreinrichtung in den Brühkammerbehälter eingefüllten Kaffeepulvers weist die erfindungsgemäße Vorrichtung weiterhin eine Rütteleinrichtung auf, welche mit dem Brühkammerbehälter gekoppelt ist, um diesen in Vibration zu versetzen, während oder nachdem das Kaffeepulver von der Zufuhreinrichtung in den Brühkammerbehälter zugeführt wird bzw. zugeführt worden ist.

Die mit dem Brühkammerbehälter gekoppelte Rütteleinrichtung setzt den Brühkammerbehälter während des Einfüllens des Kaffeepulvers in den Brühkammerbehälter oder nach Beendigung des Einfüllvorgangs in Vibration. Durch die Vibration des Brühkammerbehälters wird die darin eingefüllte Menge des Kaffeepulvers während oder nach dem Einfüllvorgang gleichmäßig in dem Brühkammerbehälter verteilt, ohne dass sich ein bergförmiger Haufen von Kaffeepulver in dem Brühkammerbehälter ausbilden kann. Nach Beendigung des Einfüllens des Kaffeepulvers in den Brühkammerbehälter und der Vergleichmäßigung der Verteilung des eingefüllten Kaffeepulvers kann die Rütteleinrichtung abgeschaltet und die eingefüllte Menge des Kaffeepulvers mit einem Stempel, der durch die Einfüllöffnung in den Brühkammerbehälter gepresst wird, verdichtet werden. Der Stempel ist dabei zweckmäßig integraler Bestandteil der Kaffeemaschine, so dass das Verdichten des eingefüllten Kaffeepulvers automatisiert innerhalb der Kaffeemaschine erfolgen kann.

Um sicherzustellen, dass die gesamte Menge des Kaffeepulvers, die von der Zufuhreinrichtung zur Brühkammer transportiert wird, in den Brühkammerbehälter gelangt, ist es zweckmäßig, die Zufuhreinrichtung mit einem vom Brühkammerbehälter entkoppelten Zufuhrorgan auszustatten. Das Kaffeepulver kann dadurch weitgehend verlustfrei von der Zufuhreinrichtung in den Brühkammerbehälter der Brühkammer geleitet werden. Bei dem Zufuhrorgan kann es sich beispielsweise um einen Trichter oder ein Einfüllrohr handeln. Das Zufuhrorgan ist zweckmäßig oberhalb der Einfüllöffnung des Brühkammerbehälters angeordnet, so dass das Kaffeepulver schwerkraftbedingt aus einer Auslauföffnung des Zufuhrorgans in den Brühkammerbehälter fallen kann. Das Zufuhrorgan ist dabei vorteilhaft vom Brühkammerbehälter entkoppelt. Dies stellt sicher, dass beim Betrieb der Rütteleinrichtung nur der mit dieser gekoppelten Brühkammerbehälter in Vibration versetzt wird, nicht jedoch das Zufuhrorgan. Dadurch kann ein ungehinderter Auslauf des Kaffeepulvers aus der Auslauföffnung des Zufuhrorgans in den Brühkammerbehälter gewährleistet werden, ohne dass der Auslauf des Kaffeepulvers durch Vibrationen gestört wird.

Bei dem Brühkammerbehälter kann es sich um einen zweckmäßig zylindrisch ausgebildeten Behälter handeln, der als Bestandteil einer Brühkammer in die Kaffeemaschine integriert ist. Ein solcher, in eine vollautomatische Kaffeemaschine integrierter Brühkammerbehälter umfasst beispielsweise einen rohrförmigen Grundkörper mit einer oben angeordneten Einfüllöffnung und einer dieser gegenüberliegenden Auslassöffnung. In die Auslassöffnung ist ein beweglicher erster Stempel eingeführt, der in seiner eingeführten Stellung einen Boden in dem Brühkammerbehälter ausbildet. Ein weiterer Stempel ist von oben durch die Einfüllöffnung einführbar. Zum Befüllen des so ausgebildeten Brühkammerbehälters mit Kaffeepulver und während des Aufbrühens des Kaffeepulvers zu einem Kaffeegetränk befindet sich der erste Stempel in seiner eingeführten Stellung und bildet den Boden des Brühkammerbehälters aus, auf dem die eingefüllte Menge des Kaffeepulvers aufliegt. Nach dem Einfüllen der gewünschten Menge des Kaffeepulvers kann der weitere Stempel durch die Einfüllöffnung in den Brühkammerbehälter gepresst werden, um das sich darin befindliche Kaffeepulver zu verdichten. Nach dem Verdichten des Kaffeepulvers wird der weitere Stempel aus dem Brühkammerbehälter herausgeführt und das im Brühkammerbehälter verpresste Kaffeepulver wird mit heißem Wasser aufgebrüht. Das auf diese Weise erzeugte Kaffeegetränk fließt durch einen Kaffeeauslauf aus dem Brühkammerbehälter heraus und kann portionsweise in eine Tasse gefüllt werden. Nach Beendigung des Aufbrühvorgangs kann der sich in der Auslassöffnung befindliche Stempel aus dem Brühkammerbehälter herausgeführt werden, um das verbrauchte Kaffeepulver aus dem Brühkammerbehälter zu entfernen, wobei zum Ausstoßen des feuchten Kaffeepulverkuchens der weitere Stempel wiederum von oben durch die Einfüllöffnung des Brühkammerbehälters eingeführt werden kann, um den verbrauchten Kaffeefilterkuchen durch die Auslassöffnung aus dem Brühkammerbehälter herauszudrücken.

Um zu verhindern, dass das Zufuhrorgan der Zufuhreinrichtung beim Verdichten des eingefüllten Kaffepulvers stört, ist es zweckmäßig wenn der Brühkammerbehälter und das Zufuhrorgan gegeneinander verschwenkbar sind. So kann bspw. das Zufuhrorgan oberhalb des Brühkammerbehälters verschwenkbar gelagert sein. Dadurch kann das Zufuhrorgan vom Brühkammerbehälter weggeschwenkt werden, nachdem das Kaffeepulver vollständig in den Brühkammerbehälter eingefüllt worden ist, so dass der zweite Stempel behinderungsfrei von oben in die Einfüllöffnung des Brühkammerbehälters eingeführt werden kann, um das Kaffeepulver zu verdichten. Dabei ist es auch möglich den Brühkammerbehälter gegenüber dem dann feststehenden Zufuhrorgan verschwenkbar zu lagern. Dabei ist es bevorzugt, die Schwenkbewegung des Brühkammerbehälters von der Rütteleinrichtung auf den Brühkammerbehälter zu übertragen. Dadurch kann die Verschwenkbewegung des Brühkammerbehälters durch die Rütteleinrichtung ausgelöst werden.

Bei dem Brühkammerbehälter kann es sich auch um einen Siebträgerbehälter einer Siebträgermaschine handeln, der beispielsweise bei halbautomatischen Espressomaschinen eingesetzt wird. Derartige Siebträgerbehälter weisen einen topf- oder tassenförmigen Behälter zur Aufnahme und zum Aufbrühen von Kaffeepulver sowie eine obere Einfüllöffnung zum Einbringen des Kaffeepulvers und wenigstens eine Auslauföffnung auf, aus der der aufgebrühte Espresso aus dem Siebträgerbehälter ausfließen kann.

Die Rütteleinrichtung der erfindungsgemäßen Vorrichtung weist zweckmäßig einen elektrisch angetriebenen Motor, insbesondere einen Exzenter oder einen Unwuchtmotor auf. Der elektrisch angetriebene Motor der Rütteleinrichtung, der beispielsweise in der Ausbildung als Unwuchtmotor eine Unwucht antreibt, kann auf einfache Weise in die Kaffeemaschine integriert und elektrisch angetrieben werden, da in einer voll- oder halbautomatischen Kaffeemaschine ohnehin eine elektrische Versorgung beispielsweise für die Pumpen zur Zuführung des Brühwassers und für eine Elektroheizung zur Erhitzung des Brühwassers vorhanden ist. Die Rütteleinrichtung kann in einem zweckmäßigen Ausführungsbeispiel auch eine alternierend und drehend hin- und herbewegte Welle aufweisen, die in radialer Richtung der Welle mit dem Brühkammerbehälter verbunden ist, um die Rotationsbewegungen der Rütteleinrichtung auf den Brühkammerbehälter zu übertragen.

Zweckmäßig ist der Brühkammerbehälter so mit der Rütteleinrichtung gekoppelt, dass eine Übertragung der Rüttelbewegungen der Rütteleinrichtung auf den Brühkammerbehälter in zwei orthogonal zueinander stehenden Richtungen erfolgt. So kann beispielsweise bei einer zylindrischen Ausbildung des Brühkammerbehälters eine Bewegung des Brühkammerbehälters in radialer oder in axialer Richtung erfolgen. Es ist dabei auch möglich, eine überlagerte Rüttelbewegung sowohl in radialer Richtung als auch in axialer Richtung zu erzeugen. Eine Übertragung der von der Rütteleinrichtung auf den Brühkammerbehälter übertragenen Vibration sowohl in radialer als auch in axialer Richtung verbessert einerseits die homogene Verteilung des in den Brühkammerbehälter eingefüllten Kaffeepulvers und gewährleistet andererseits bereits eine Vorverdichtung, die wiederum in Verbindung mit dem Stempel, der zum Verdichten des Kaffeepulvers in die Einfüllöffnung des Brühkammerbehälters eingeführt wird, eine homogene Dichteverteilung des im Brühkammerbehälter verpressten Kaffeepulvers ermöglicht.

Zur Steuerung der Vibrationsbewegungen, die von der Rütteleinrichtung auf den Brühkammerbehälter übertragen werden, ist die Rütteleinrichtung zweckmäßig mit einer Steuereinrichtung der Kaffeemaschine gekoppelt. Die Rütteleinrichtung kann dabei von der Steuereinrichtung so gesteuert werden, dass sie den Brühkammerbehälter in Vibration versetzt, während die Zufuhreinrichtung Kaffeepulver in den Brühkammerbehälter leitet. Es ist auch möglich, dass die Steuereinrichtung die Rütteleinrichtung nach Beendigung des Einfüllvorgangs in Betrieb setzt, so dass das von der Zufuhreinrichtung in den Brühkammerbehälter geleitete Kaffeepulver nach Beendigung des Einfüllvorgangs in dem Brühkammerbehälter durch die von der Rütteleinrichtung auf den Brühkammerbehälter übertragenen Vibrationen vergleichmäßigt wird.

Bevorzugt kann dabei die Amplitude und/oder die Frequenz der von der Rütteleinrichtung auf den Brühkammerbehälter übertragenen Rüttelbewegung eingestellt werden. Diese Einstellung erfolgt zweckmäßig über die Steuereinrichtung der Kaffeemaschine, wobei ein Bediener an einer Bedienerschnittstelle gewünschte Einstellungen für die Amplitude und/oder die Frequenz der Rüttelbewegung der Rütteleinrichtung vorgeben kann. Dadurch wird ermöglicht, die gleichmäßige Verteilung und Verdichtung des Kaffeepulvers im Brühkammerbehälter an unterschiedliche Zusammensetzungen und Parameter des Kaffeepulvers anzupassen, beispielsweise an den Mahlgrad des Kaffeepulvers oder den Röstgrad der Kaffeebohnen, aus denen das Kaffeepulver durch Vermahlen erzeugt worden ist.

Diese und weitere Vorteile und Merkmale der Erfindung ergeben sich aus dem nachfolgend unter Bezugnahme auf die begleitende Zeichnung näher beschriebenen Ausführungsbeispiel. Die Zeichnungen zeigen:
- **Figur 1:**: Schematische Darstellung einer erfindungsgemäßen Vorrichtung zum Zuführen von Kaffeepulver in eine Brühkammer einer Kaffeemaschine, wobei die Vorrichtung in
- **Figur 1a**: beim Einfüllen des Kaffeepulvers in einen Brühkammerbehälter der Brühkammer gezeigt ist,
- **Figur 1b**: den mit einer Rütteleinrichtung gekoppelten Brühkammerbehälter während des Einfüllens des Kaffeepulvers zeigt und
- **Figur 1c**: den Brühkammerbehälter beim Verdichten des eingefüllten Kaffeepulvers mit einem in den Brühkammerbehälter einführbaren Stempel zeigt;
- **Figur 2:**: Darstellung eines Ausführungsbeispiels für die Ankopplung einer Rütteleinrichtung an den Brühkammerbehälter einer erfindungsgemäßen Vorrichtung, wobei
- **Figur 2a**: die Vorrichtung in einer Seitenansicht und
- **Figur 2b**: die Vorrichtung in einer Draufsicht zeigt.

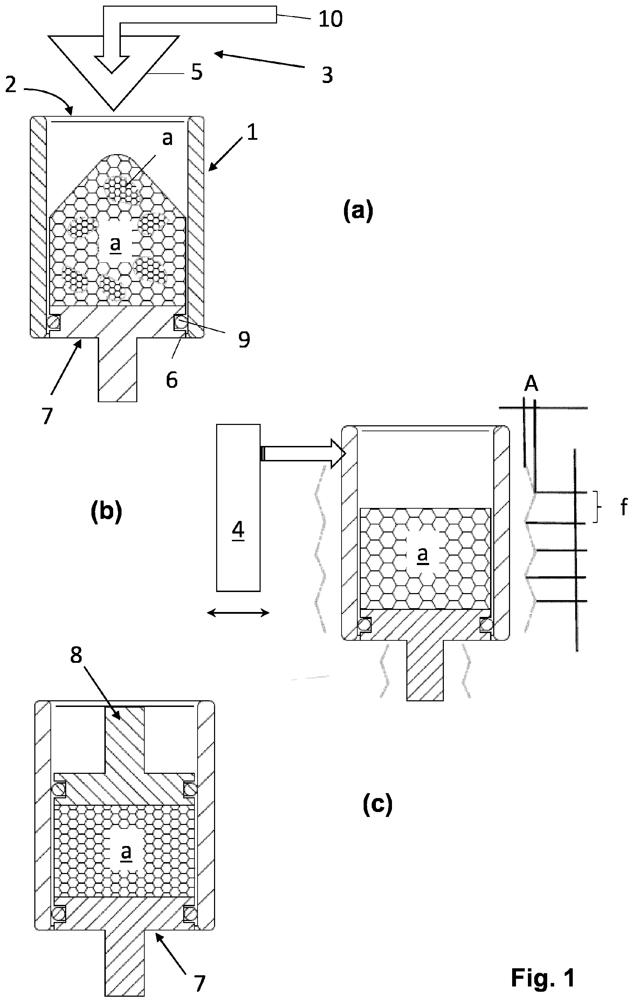

In Figur 1 ist eine erfindungsgemäße Vorrichtung zum Zuführen von Kaffeepulver in eine Brühkammer einer Kaffeemaschine gezeigt. Bei der Brühkammer kann es sich um eine in eine Kaffeemaschine, beispielsweise einen Kaffeevollautomaten, integrierte Brühkammer handeln. Die Brühkammer kann jedoch auch als Siebträger einer Siebträgermaschine für die Herstellung von Espresso ausgebildet sein.

Bei dem in Figur 1 gezeigten Ausführungsbeispiel handelt es sich um eine in einen Kaffeevollautomaten integrierte oder integrierbare Brühkammer, welche einen Brühkammerbehälter 1 in Form eines Rohrstücks mit einer oberen Einfüllöffnung 2 und einer dieser gegenüberliegenden Auslassöffnung 6 aufweist. In die Auslassöffnung 6 ist ein beweglicher Stempel 7 eingeführt, der in seiner in Figur 1 gezeigten eingeführten Stellung einen Boden des Brühkammerbehälters 1 ausbildet. Zum Abdichten des Bodens gegenüber der rohrförmigen Wandung des Brühkammerbehälters 1 sind Dichtungen 9 vorgesehen. Oberhalb der Einfüllöffnung 2 ist ein Zufuhrorgan 5 einer Zufuhreinrichtung 3 zur Zuführung des Kaffeepulvers a angeordnet. Bei dem Zufuhrorgan 5 kann es sich, wie in Figur 1a angedeutet, um einen Trichter handeln. Das Zufuhrorgan kann auch als Einfüllrohr oder -schlauch ausgebildet sein. Die Zufuhreinrichtung 3 ist über eine Verbindungsleitung 10 mit einer hier nicht dargestellten Mahleinrichtung verbunden. Bei der Mahleinrichtung kann es sich um eine in die Kaffeemaschine integrierte Mühle zum Vermahlen von Kaffeebohnen handeln. Das von der Mahleinrichtung erzeugte Kaffeepulver wird durch die Zufuhrleitung 10 und das Zufuhrorgan 5 durch die Einfüllöffnung 2 in den Brühkammerbehälter 1 geleitet, wobei das Kaffeepulver a schwerkraftbedingt aus dem Zufuhrorgan 5 in den Brühkammerbehälter 1 rieselt. Dabei bildet sich, wie in Figur 1a angedeutet, ein Haufen von Kaffeepulver a.

Um eine Anhäufung des in den Brühkammerbehälter 1 eingefüllten Kaffeepulvers a in Form eines Kaffeepulverhaufens zu vermeiden, ist bei der erfindungsgemäßen Vorrichtung eine Rütteleinrichtung 4 mechanisch mit dem Brühkammerbehälter 1 gekoppelt. Bei der Rütteleinrichtung kann es sich beispielsweise um einen elektrisch angetriebenen Exzenter oder einen elektrischen Unwuchtmotor handeln, der eine Unwucht in dem Motor antreibt. Die Rütteleinrichtung 4 erzeugt Rüttelbewegungen mit einer vorgegebenen Amplitude A und einer vorgegebenen Frequenz f. Diese Rüttelbewegungen werden durch die mechanische Kopplung der Rütteleinrichtung der Rütteleinrichtung 4 an den Brühkammerbehälter 1 übertragen, was in Figur 1b durch den zwischen der Rütteleinrichtung 4 und dem Brühkammerbehälter 1 gezeigten Pfeil angedeutet ist. Durch die Übertragung der Rüttelbewegungen der Rütteleinrichtung 4 auf den Brühkammerbehälter 1 führt auch der Brühkammerbehälter 1 Vibrationen mit der vorgegebenen Amplitude A und der vorgegebenen Frequenz f aus.

In zweckmäßigen Ausführungsbeispielen kann die Rüttelbewegung entweder in radialer Richtung des Brühkammerbehälters 1 oder auch in axialer Richtung des Brühkammerbehälters 1 auf den Brühkammerbehälter übertragen werden. Besonders bevorzugt ist eine Übertragung der Rüttelbewegungen der Rütteleinrichtung 4 auf den Brühkammerbehälter 1 in zwei zueinander orthogonal stehenden Richtungen, also beispielsweise in radialer und axialer Richtung des zylindrisch ausgebildeten Brühkammerbehälters 1.

Zur Steuerung der von der Rütteleinrichtung 4 auf den Brühkammerbehälter 1 übertragenen Rüttelbewegungen ist der elektrisch angetriebene Motor der Rütteleinrichtung 4 mit einer Steuereinrichtung gekoppelt. Bei der Steuereinrichtung kann es sich dabei zweckmäßig um die zentrale Steuereinrichtung der Kaffeemaschine handeln. Über diese Steuereinrichtung wird die Amplitude und die Frequenz der Rüttelbewegungen gesteuert. Bevorzugt umfasst die Steuereinrichtung eine Bedienoberfläche, über die ein Bediener der Kaffeemaschine die gewünschte Amplitude A und die gewünschte Frequenz f der Rüttelbewegungen eingeben bzw. aus einer Reihe von vorgegebenen Werten auswählen kann. Die Steuereinrichtung steuert die Rütteleinrichtung 4 entsprechend der eingegebenen Werte für die Amplitude A und die Frequenz f an.

Zweckmäßig ist die Steuereinrichtung dabei so eingerichtet, dass die Rütteleinrichtung 4 während des Einfüllens von Kaffeepulver a mittels der Zufuhreinrichtung 3 in den Brühkammerbehälter 1 in Betrieb gesetzt und nach Beendigung des Einfüllvorgangs abgeschaltet wird. Es ist jedoch auch möglich, dass die Rütteleinrichtung 4 erst nach Beendigung des Einfüllvorgangs in Betrieb gesetzt wird, um den an die Rütteleinrichtung 4 gekoppelten Brühkammerbehälter 1 in Vibration zu versetzen. Durch die auf den Brühkammerbehälter 1 übertragenen Vibrationen wird das Kaffeepulver a entweder bereits beim Einfüllvorgang und/oder nach dem Einfüllvorgang in dem Brühkammerbehälter 1 gleichmäßig verteilt, wobei sich eine ebene, horizontale Nivellierung des Kaffeepulvers a im Brühkammerbehälter 1 ergibt, wie in Figur 1b gezeigt.

Nach dem Einfüllen und der Vergleichmäßigung der eingefüllten Menge des Kaffeepulvers a in den Brühkammerbehälter 1 wird ein zweiter Stempel 8 von oben durch die Einfüllöffnung 2 in den Brühkammerbehälter 1 gepresst, um die eingefüllte Menge von Kaffeepulver a zu verdichten. Damit die Zufuhreinrichtung 3 die Einführbewegung des zweiten Stempels 8 in den Brühkammerbehälter 1 nicht behindert, ist die Zufuhreinrichtung 3 verschwenkbar ausgebildet, so dass die Zufuhreinrichtung 3 beim Einführen des zweiten Stempels 8 in den Brühkammerbehälter 1 von der Einfüllöffnung 2 weggeschwenkt werden kann.

Im zweiten Stempel 8 ist eine hier nicht dargestellte Zufuhrleitung zur Zuführung von heißem Wasser angeordnet. Nach dem Verdichten des Kaffeepulvers a wird über diese Zufuhrleitung heißes Wasser in den Brühkammerbehälter 1 geleitet, um das eingefüllte Kaffeepulver a aufzubrühen. Das dadurch erzeugte Kaffeegetränk kann durch einen hier ebenfalls nicht dargestellten Kaffeeauslauf aus dem Brühkammerbehälter 1 auslaufen und in eine Tasse gefüllt werden.

Nach Beendigung des Brühvorgangs und Entnahme des dadurch erzeugten Kaffeegetränks wird der untere, erste Stempel 7 aus dem Brühkammerbehälter 1 ausgefahren und der sich im Brühkammerbehälter 1 befindliche, feuchte Kaffeepulverkuchen des verbrauchten Kaffeepulvers kann durch eine weitere Bewegung des oberen, zweiten Stempels 8 nach unten aus der Auslassöffnung 6 gedrückt werden, um die Brühkammer für den nächsten Brühvorgang zur Herstellung eines Kaffeegetränks freizugeben.

Danach wird der Boden des Brühkammerbehälters 1 wieder durch Einschieben des (unteren) ersten Stempels 7 in die Auslassöffnung 6 des Brühkammerbehälters 1 geschlossen, damit für den nächsten Brühvorgang wieder eine vorgegebene Menge von Kaffeepulver in den Brühkammerbehälter 1 dosiert und in der oben beschriebenen Weise gleichmäßig verdichtet werden kann.

Um zu gewährleisten, dass die gesamte Menge von Kaffeepulver, die von der Mahleinrichtung bereitgestellt wird, verlustfrei über die Zufuhreinrichtung 3 in den Brühkammerbehälter 1 geleitet werden kann, ist das Zufuhrorgan 5 bevorzugt mechanisch vom Brühkammerbehälter 1 entkoppelt. Dies gewährleistet, dass während des Betriebs der Rütteleinrichtung 4 die Vibrationen nur auf den Brühkammerbehälter 1, nicht jedoch auf das Zufuhrorgan 5 bzw., die Zufuhreinrichtung 3 übertragen werden.

Die von der Rütteleinrichtung 4 während und/oder nach dem Einfüllen des Kaffeepulvers a in den Brühkammerbehälter 1 übertragenen Rüttelbewegungen führen zu einer gleichmäßigen Verteilung der eingefüllten Menge des Kaffeepulvers a in dem Brühlkammerbehälter 1 und stellen eine weitgehend ebene, horizontal verlaufende Oberfläche der eingefüllten Kaffeepulvermenge sicher. Dadurch kann beim anschließenden Verdichten des eingefüllten Kaffeepulvers a durch den oberen, zweiten Stempel 8 eine gleichmäßige und homogene Verdichtung des Kaffeepulvers a im Brühkammerbehälter 1 gewährleistet werden. Das eingefüllte und verdichtete Kaffeepulver weist dabei über das gesamte Volumen des eingefüllten Kaffeepulvers eine homogene Dichteverteilung auf. Eine möglichst homogene Verteilung und gleichmäßige Dichte der eingefüllten Kaffeepulvermenge hat einen positiven Einfluss auf die Qualität des erzeugten Kaffeegetränks, da beim Aufbrühen des gleichmäßig in dem Brühkammerbehälter 1 verteilten Kaffeepulvers ein möglichst großes, effektives Aufbrühvolumen ausgenutzt werden kann.

Durch die bevorzugt ermöglichte Einstellung der Amplitude und/oder der Frequenz der Rüttelbewegungen, die von der Rütteleinrichtung 4 auf den Brühkammerbehälter 1 übertragen werden, kann die gewünschte homogene Verteilung des Kaffeepulvers im Brühkammerbehälter 1 an die Eigenschaften des verwendeten Kaffeepulvers, wie z.B. dessen Mahl- oder Röstgrad, angepasst werden. Die Eigenschaften des Kaffeepulvers haben dabei ebenfalls einen erheblichen Einfluss auf die Qualität und den Geschmack des erzeugten Kaffeegetränks, die unter Verwendung einer erfindungsgemäßen Vorrichtung noch optimiert werden können.

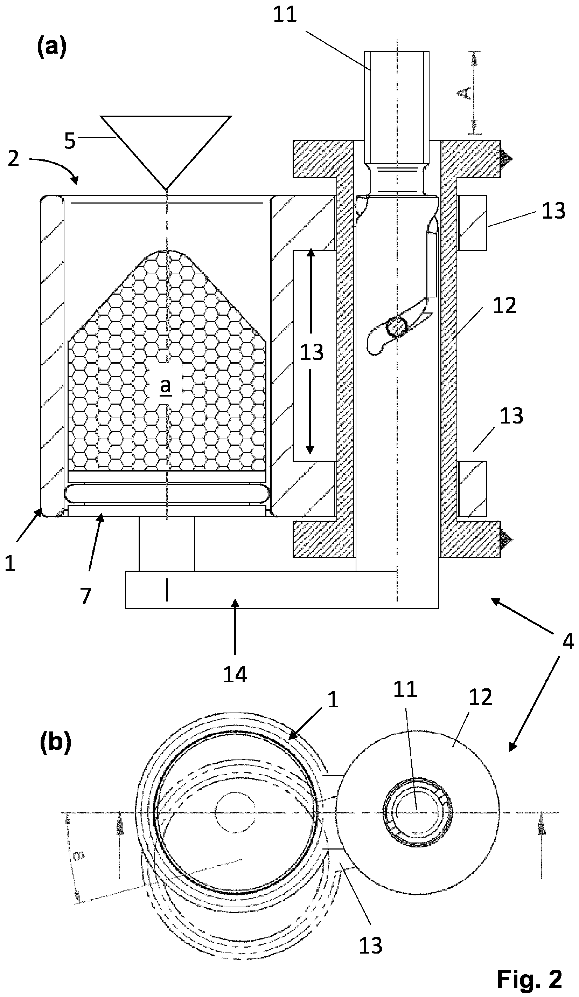

In Figur 2 ist ein Ausführungsbeispiel für die Ankopplung einer Rütteleinrichtung 4 an einen Brühkammerbehälter 1 dargestellt. Die Rütteleinrichtung 4 umfasst dabei eine drehbar in einem hülsenförmigen Lagergehäuse 12 gelagerte Welle 11, welche an einen hier nicht dargestellten Motor gekoppelt ist. Die Welle 11 kann über den Motor in Drehung versetzt und/oder axial in dem Lagergehäuse 12 verschoben werden. Insbesondere kann der Motor alternierende Drehbewegungen, also Hin- und Herbewegungen zur Erzeugung von Rüttelbewegungen auf die Welle 11 übertragen. Am unteren Ende der Welle 11 ist ein Verbindungsteil 14 angeordnet, welches die Welle 11 mit dem unteren Stempel 7 verbindet. Der untere Stempel 7 ist in der in Figur 2a gezeigten Stellung in die Auslassöffnung 6 eingeführt, um einen Boden des Brühkammerbehälters 1 auszubilden. Am Außenumfang des Brühkammerbehälters 1 sind radial vorstehende Flansche 13 angeordnet, welche das Lagergehäuse 12 umgreifen und drehbeweglich am Außenumfang des Lagergehäuses 12 gelagert sind.

Die Welle 11 kann zweckmäßig in dem fest stehenden Lagergehäuse 12 sowohl gedreht als auch in axialer Richtung nach oben und unten verschoben werden. Der mit der Welle 11 gekoppelte Motor ist dabei bevorzugt so von einer Steuereinrichtung angesteuert, dass er sowohl periodische Drehbewegungen in Form von Hin- und Herbewegungen als auch axiale Verschiebungen der Welle 11 gegenüber der Lagerhülse 12 auslösen kann.

Bei einer Übertragung von Hin- und Her-Drehbewegungen der Welle 11 gegenüber der feststehenden Lagerhülse 12 werden die Drehbewegungen der Welle 11 über das Verbindungsteil 14 als Vibrationsbewegungen auf den Brühkammerbehälter 1 übertragen. Dadurch wird der Brühkammerbehälter 1 in Vibration gesetzt. Eine axiale Bewegung der Welle 11 in der Lagerhülse 12 wird ebenfalls auf den Brühkammerbehälter 1 über das Verbindungsteil 14 übertragen. Wenn die Welle 11 in axialer Richtung abwechselnd periodisch nach oben und unten bewegt wird, wird diese Bewegung der Welle 11 als axiale Vibrationsbewegung auf den Brühkammerbehälter 1 übertragen.

In Figur 2b sind die von der Rütteleinrichtung 4 auf den Brühkammerbehälter 1 übertragbaren periodische Drehbewegungen innerhalb eines Drehwinkels β dargestellt.

Bei der in Figur 2 gezeigten Ausführungsform einer erfindungsgemäßen Vorrichtung kann die Ankopplung des unteren Stempels 7 über das Verbindungsteil 14 an der Welle 11 auch zum Ein- und Ausfahren des unteren Stempels 7 in die Auslassöffnung 6 bzw. aus der Auslassöffnung 6 heraus verwendet werden. Zum Herausfahren des unteren Stempels 7 aus der Auslassöffnung 6 des Brühkammerbehälters 1 kann die Welle 11 in axialer Richtung in der Lagerhülse 12 nach unten verschoben werden. Um den aus der Auslassöffnung 6 herausgefahrenen Stempel 7 von der Auslassöffnung 6 wegzubewegen, kann die Welle 11 anschließend um einen vorgegebenen Winkel gedreht werden. Zweckmäßig ist der Drehwinkel dabei so groß eingestellt, dass der ausgefahrene Stempel 7 vollständig von der Auslassöffnung 6 weggeschwenkt werden kann. Durch das Wegschwenken des unteren Stempels 7 kann der sich nach Beendigung eines Aufbrühvorgangs in dem Brühkammerbehälter 1 befindliche Kaffeepulverkuchen von verbrauchtem Kaffeepulver a mittels des oberen Stempels 8 aus dem Brühkammerbehälter 1 behinderungsfrei ausgeworfen werden.

## Patentansprüche

1. Vorrichtung zum Zuführen von Kaffeepulver (a) in eine Brühkammer einer Kaffeemaschine, umfassend einen zylindrischen und eine Einfüllöffnung (2) aufweisenden Brühkammerbehälter (1) zur Aufnahme und zum Aufbrühen des Kaffeepulvers (a), eine Zufuhreinrichtung (3) zur Zuführung des Kaffeepulvers (a) durch die Einfüllöffnung (2) in den Brühkammerbehälter (1), und eine Rütteleinrichtung (4), welche mit dem Brühkammerbehälter (1) gekoppelt ist, um den Brühkammerbehälter (1) während und/oder nach dem Einfüllen von Kaffeepulver in Vibration zu versetzen, **dadurch gekennzeichnet, dass** die Rütteleinrichtung (4) eine alternierend und drehend hin- und her bewegbare Welle (11) umfasst, wobei die Welle (11) mit dem Brühkammerbehälter (1) verbunden ist, um die Bewegungen der Welle (11) auf den Brühkammerbehälter (1) zu übertragen, wobei die Welle (11) in axialer Richtung bewegbar ist, insbesondere in periodischen Axialbewegungen.

2. Vorrichtung nach Anspruch 1, **dadurch gekennzeichnet, dass** die Zufuhreinrichtung (3) ein vom Brühkammerbehälter (1) entkoppeltes Zufuhrorgan (5), insbesondere in Form eines Trichters oder Einfüllrohrs, aufweist, über welches das Kaffeepulver (a) durch die Einfüllöffnung (2) in den Brühkammerbehälter (1) eingefüllt werden kann.

3. Vorrichtung nach Anspruch 1 oder 2, **dadurch gekennzeichnet, dass** der Brühkammerbehälter (1) zylindrisch ausgebildet ist und dass die Rütteleinrichtung (4) den Brühkammerbehälter (1) während des Einfüllens von Kaffeepulver (a) in axialer Richtung oder in radialer Richtung in Vibration versetzt.

4. Vorrichtung nach Anspruch 1 oder 2, **dadurch gekennzeichnet, dass** der Brühkammerbehälter (1) zylindrisch ausgebildet ist und dass die Rütteleinrichtung (4) den Brühkammerbehälter (1) während des Einfüllens von Kaffeepulver (a) sowohl in axialer Richtung als auch in radialer Richtung in Vibration versetzt.

5. Vorrichtung nach einem der voranstehenden Ansprüche, **dadurch gekennzeichnet, dass** die Rütteleinrichtung (4) mit einer Steuereinrichtung gekoppelt ist, wobei die Rütteleinrichtung (4) von der Steuereinrichtung so gesteuert wird, dass sie den Brühkammerbehälter (1) in Vibration versetzt, während die Zufuhreinrichtung (4) Kaffeepulver (a) in den Brühkammerbehälter (1) leitet und/oder nachdem der Brühkammerbehälter (1) mit Kaffeepulver befüllt worden ist.

6. Vorrichtung nach einem der voranstehenden Ansprüche, **dadurch gekennzeichnet, dass** die Amplitude (A) und/oder die Frequenz (f) der von der Rütteleinrichtung (4) auf den Brühkammerbehälter (1) übertragene Rüttelbewegung über eine Steuereinrichtung einstellbar ist.

7. Vorrichtung nach einem der voranstehenden Ansprüche, **dadurch gekennzeichnet, dass** der Brühkammerbehälter (1) eine der Einfüllöffnung (2) gegenüberliegende Auslassöffnung (6) aufweist, durch die nach dem Aufbrühen des Kaffeepulvers das verbrauchte Kaffeepulver ausgeworfen werden kann.

8. Vorrichtung nach Anspruch 7, **dadurch gekennzeichnet, dass** in die Auslassöffnung (6) ein beweglicher erster Stempel (7) einführbar und ausführbar ist, wobei der erste Stempel (7) in eingeführter Stellung einen Boden in dem Brühkammerbehälter (1) ausbildet.

9. Vorrichtung nach einem der voranstehenden Ansprüche, **dadurch gekennzeichnet, dass** in die Einfüllöffnung (2) ein beweglicher zweiter Stempel (7) einführbar ist, wobei der zweite Stempel (8) mit einer Steuereinrichtung gekoppelt ist, welche den zweiten Stempel (8) in die Einfüllöffnung (2) presst, nachdem eine vorgegebene Menge von Kaffeepulver (a) in den Brühkammerbehälter (1) eingefüllt worden ist, um das eingefüllte Kaffeepulver (a) durch den zweiten Stempel (8) zu verdichten.

10. Vorrichtung nach einem der voranstehenden Ansprüche, **dadurch gekennzeichnet, dass** der Brühkammerbehälter (1) einen Kaffeeauslauf aufweist, durch den der in dem Brühkammerbehälter (1) durch Aufbrühen des Kaffeepulvers mit heißem Wasser erzeugte Kaffee aus der Brühkammer abfließen kann.

11. Vorrichtung nach einem der voranstehenden Ansprüche, **dadurch gekennzeichnet, dass** die Zufuhreinrichtung (3) mit einer Mahleinrichtung gekoppelt ist, wobei die Mahleinrichtung das Kaffeepulver (a) durch Mahlen von Kaffeebohnen erzeugt.

12. Vorrichtung nach einem der voranstehenden Ansprüche, **dadurch gekennzeichnet, dass** die Rütteleinrichtung (4) einen elektrisch angetriebenen Motor, insbesondere einen Exzenter oder einen Unwuchtmotor, umfasst.

13. Vorrichtung nach einem der voranstehenden Ansprüche, **dadurch gekennzeichnet, dass** die Rütteleinrichtung (4) den Brühkammerbehälter (1) während und/oder nach dem Einfüllen von Kaffeepulver (a) in zwei zueinander orthogonal stehenden Richtungen, insbesondere in axialer Richtung des Brühkammerbehälters (1) und senkrecht dazu, in Vibration versetzt.

14. Vorrichtung nach einem der Ansprüche 2 bis 13, **dadurch gekennzeichnet, dass** das Zufuhrorgan (5) der Zufuhreinrichtung (3) und der Brühkammerbehälter (1) gegeneinander verschwenkbar sind.
Vorrichtung nach einem der Ansprüche 2 bis 13, **dadurch gekennzeichnet, dass** der Brühkammerbehälter (1) gegenüber dem feststehenden Zufuhrorgan (5) verschwenkbar ist, wobei eine Verschwenkbewegung des Brühkammerbehälters (1) von der Rütteleinrichtung (4) auslösbar ist.
